# EUROPÄISCHE PATENTANMELDUNG

(11) **EP 0 801 969 A1**
(43) Veröffentlichungstag der Anmeldung: **22.10.1997**
(21) Anmeldenummer: 97104858.2
(22) Anmeldetag: 21.03.1997
(51) Int. Cl.: B01D 39/14, B01D 39/16, B01D 39/20, C08J 5/08

(54) **Filtermedium**

(30) Priorität: 17.04.1996 DE 19615022
(71) Anmelder: MGF GUTSCHE & CO. GMBH-BETRIEBS-KG, D-36039 Fulda (DE)
(72) Erfinder: Gutsche, Eugen, 36041 Fulda (DE)
(74) Vertreter: Schlagwein, Udo, Dipl.-Ing.

(57) **Zusammenfassung**

Ein Filtermedium hat ein Filtergewebe (1) aus Glasfasern, welches mit Fasern (2) belegt ist. Die mit dem Filtergewebe (1) verbundenen Fasern (2) bestehen aus einem temperaturfesten und chemikalienbeständigen Polymer und haben einen Gewichtsanteil am Gesamtgewicht des Filtermediums von unter 40%.

## Beschreibung

Die Erfindung betrifft ein Filtermedium, welches ein Filtergewebe hat, das mit Fasern belegt ist.

Ein Filtermedium der vorstehenden Art ist Gegenstand der EP-B-0 417 364. Bei dem bekannten Filtermedium bestehtdas Filtergewebe aus organischen Polymeren oder aus einem mit einem Faservlies aus beispielsweise Polyester belegten, grob gewebten Leinen- oder Baumwollstoff. Auf der Anströmseite ist das Filtergewebe mit Fasern aus einem speziellen Polyimid belegt, welches bei der Filtration elektrostatische Felder erzeugen und dadurch den Filterwirkungsgrad erheblich verbessern soll. Für manche Anwendungsfälle ist es bei dem bekannten Filtermedium jedoch nachteilig, daß wegen des Materials des Filtergewebes und des Faservlieses die Temperaturbeständigkeit nicht ausreicht.

In Filtern für Abgase mit höheren Temperaturen benutzt man vielfach als Filtermedium Filtergewebe aus Glasfasern, weil diese kurzfristig Temperaturen bis 500° C zu widerstehen vermögen. Solche Filtergewebe sind aufgrund des preisgünstigen Rohstoffes auf Glasbasis relativ kostengünstig herstellbar. Sie besitzen eine sehr hohe Längsfestigkeit, jedoch nur eine geringe Querfestigkeit und neigen deshalb verhältnismäßig leicht zu Knickbrüchen in Querrichtung. Durch solche Querbrüche vermindert sich der mit dem unbeschädigten Filtermedium erreichbare Filterwirkungsgrad derart, daß das Filtermedium ausgetauscht werden muß. Die Gefahr des Entstehens von Querbrüchen ist bei Schlauchfiltern besonders groß, welche statt durch Spülluft mittels Druckluftimpulsen abgereinigt werden.

Es ist zwar bekannt, Filtergewebe aus Glasfasern zur Erhöhung der Querbruchfestigkeit mit PTFE oder Graphit zu ummanteln, was die Knick-Bruch-Festigkeit jedoch nur begrenzt verbessert. Deshalb wendet man für Hochtemperaturanwendungen vielfach Filtermedien an, die aus PTFE oder Polyimidfasern bestehen, welche jedoch erheblich teurer sind als Glasfasergewebe.

Bekannt ist es auch, bei einem Filtermedium mehr oder weniger grobmaschige Stützgewebe vorzusehen, auf welches nach beiden Seiten hin ein Faservlies genadelt ist. Als Beispiel für den Stand der Technik sei auf die EP-A-0 641 588 verwiesen. Bei einem solchen Filtermedium kommt die verbesserte Filterwirkung überwiegend durch das Faservlies zustande. Wie in der Schrift zu lesen ist, dient das Stützgewebe im wesentlichen der Aufnahme der auf das Filtermedium einwirkenden Kräfte. Deshalb wären Glasfasern wegen ihrer geringeren Querfestigkeit als Werkstoff für das Stützgewebe weniger geeignet. Da das Stützgewebe wegen seiner vorstehend beschriebenen Maschigkeit ein niedriges Flächengewicht hat, kann man hierfür jedoch auch ein relativ teures Material, wie zum Beispiel PTFE, verwenden, wenn es auf eine hohe Temperatur- und Chemikalienbeständigkeit ankommt. Insgesamt ist das bekannte Filtermedium jedoch teurer als ein Filtergewebe, da Filterverbundschichten aus Gewebe und Vlies teurer herzustellen sind als Filtergewebe.

Der Erfindung liegt das Problem zugrunde, ein kostengünstiges Filtermedium der eingangs genannten Art so zu gestalten, daß es hohen Temperaturen standzuhalten vermag, zu geringem Querbruch neigt und ausreichend hohe Festigkeit hat, dennoch aber möglichst wenige teure Materialien für seine Vliesstoffschichten oder Faserschichten benötigt.

Dieses Problem wird erfindungsgemäß dadurch gelöst, daß das Filtergewebe ein Glasgewebe ist, daß die mit dem Filtergewebe verbundenen Fasern aus einem temperaturfesten Polymer bestehen und einen Gewichtsanteil am Gesamtgewicht des Filtermediums von unter 40% haben.

Bei einem solchen Filtermedium ist kein herkömmliches Stützgewebe erforderlich, weil trotz der verhältnismäßig geringen Querfestigkeit der Glasfasern das Glasgewebe aufgrund seines für die Funktion eines Filtergewebes hohen Flächengewichtes insgesamt eine mit einem Stützgewebe aus PTFE vergleichbare Festigkeit hat. Querbrüche sind bei dem erfindungsgemäßen Filtermedium nicht zu befürchten, weil durch die Belegung des Filtergewebes mit den Fasern verhindert wird, daß das Filtermedium mit so engen Krümmungsradien geknickt werden kann, daß die Glasfasern brechen. Die durch die Faserbelegung erreichte Schutzwirkung vor Querbruch ist wesentlich höher als wenn lediglich die Glasfasern mit PTFE überzogen würden, da solche Überzüge nur eine vergleichbar geringe Dicke haben können. Die Fasern erfüllen zusätzlich zu ihrer Funktion der Verhinderung von Querbrüchen die Funktion, den Filterwirkungsgrad und die Filtereffizienz wesentlich zu erhöhen, weil durch sie aus dem zweidimensionalen Filtergewebe ein dreidimensionales Flächengebilde als Filterstoff entsteht.

Das erfindungsgemäße Filtermedium kann in Schlauchfilteranlagen eingesetzt werden, welche nach dem Druckluft-Impuls-Verfahren abgereinigt werden, ohne daß die Drahtabstände der Stützkörbe, auf welche die Filterschläuche aufgezogen sind, so verringert werden müssen wie bei reinen Glasgeweben. Es müssen auch nicht so viele Längsdrähte in die Stützkörbe integriert werden, so daß durch die Verwendung des erfindungsgemäßen Filtermediums für Filteranlagen, welche durch Druckluftimpulse abgereinigt werden, Kosten bei den Stützkörben eingespart werden können.

Da Glasfasern sehr viel feiner als jedes herkömmliche synthetische Polymer sind (im Durchschnitt zwischen 0,1 - 0,3 µm) ergibt sich in Kombination mit dem Polymer ein Filtermaterial mit hoher Abscheideleistung und gleichzeitig eine Erhöhung der bekannten schlechten Querbruchfestigkeit von reinem Glasmaterialien.

Das Filtermedium widersteht hohen Temperaturen besonders gut und hat neben der geringen Dehnung und Schrumpfneigung einen besonders hohen Abscheidegrad, wenn gemäß einer Weiterbildung der Erfindung die Fasern aus PTFE bestehen.

Die Eigenschaften des Filtermediums werden noch weiter verbessert, wenn die Fasern aus Polyimid bestehen.

Die Verbindung der Fasern mit dem Filtergewebe ist besonders einfach zu verwirklichen, wenn die Fasern durch Vernadeln mit dem Filtrationsgewebe verbunden sind.

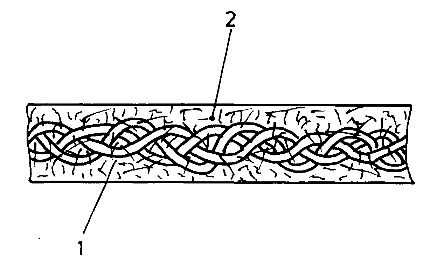

Zur weiteren Verdeutlichung der Erfindung wird nachfolgend auf die Zeichnung Bezug genommen. Diese zeigt einen schematischen Querschnitt durch ein Filtermedium nach der Erfindung.

Das dargestellte Filtermedium hat ein Filtergewebe 1, welches aus miteinander verwebten Glasfasern besteht, einen Gewichtsanteil von 70 - 85% am Gesamtgewicht des Filtermediums und ist beispielsweise 0,9 mm hoch. Die Glasfasern können mit PTFE überzogen sein. Das Filtergewebe 1 ist schon für sich allein in der Lage, eine Filterfunktion auszuüben, denn es hat aufgrund seiner Dicke genügend Längsfestigkeit, so daß ein herkömmliches Stützgewebe unnötig wird. Das Filtergewebe 1 ist nach beiden Seiten hin mit einem geringen Anteil Fasern 2 belegt, wodurch das Filtermedium beispielsweise eine Dicke von 1,4 mm erhält. Will man das Filtermedium knicken, dann verhindern diese eingenadelten, polymeren Fasern 2 enge Krümmungsradien bei den das Filtergewebe bildenden Glasfasern und vermeiden so Querbrüche.

## Patentansprüche

1. Filtermedium, welches ein Filtergewebe hat, das mit Fasern belegt ist, **dadurch gekennzeichnet**, daß das Filtergewebe (1) ein Glasgewebe ist, daß die mit dem Filtergewebe verbundenen Fasern (2) aus einem temperaturfesten Polymer bestehen und einen Gewichtsanteil am Gesamtgewicht des Filtermediums von unter 40% haben.

2. Filtermedium nach Anspruch 1, **dadurch gekennzeichnet**, daß die Fasern (2) aus PTFE bestehen.

3. Filtermedium nach den Ansprüchen 1 oder 2, **dadurch gekennzeichnet**, daß die Fasern (2) aus Polyimid bestehen.

4. Filtermedium nach zumindest einem der vorangehenden Ansprüche, **dadurch gekennzeichnet**, daß die Fasern (2) durch Vernadeln mit dem Filtergewebe (1) verbunden sind.
